Europäisches Patentamt

**European Patent Office**

Office européen des brevets

(11) Numéro de publication: **0 083 318**
**A2**

(12) # DEMANDE DE BREVET EUROPEEN

(21) Numéro de dépôt: 82830252.1

(22) Date de dépôt: 08.10.82

(51) Int. Cl.³: **F 03 D 3/04**

(30) Priorité: 09.10.81 IT 1771381

(43) Date de publication de la demande:
06.07.83 Bulletin 83/27

(84) Etats contractants désignés:
AT BE CH DE FR GB LI LU NL SE

(71) Demandeur: **Giovannetti, Ferrando**
**Loc. Mozzanella**
**I-05830 Castiglione Garfangnana(IT)**

(72) Inventeur: **Giovannetti, Ferrando**
**Loc. Mozzanella**
**I-05830 Castiglione Garfangnana(IT)**

(74) Mandataire: **Martini, Lazzaro**
**Ufficio Brevetti Ing. Lazzaro Martini Via Brunelleschi, 1**
**I-50123 Firenze(IT)**

(54) Moteur éolien.

(57) Un moteur éolien avec une ou plusieurs roues (50) à écoulement radial, montées superposées sur le même arbre (2) vertical; dans lequel chaque roue (50) est munie de plusieurs pales (5) verticales, plates ou en forme de tuile cylindrique, fixées en rayons sur le rotor (1) correspondant. Un gouvernail (70) à queue (9) tournant fou sur l'arbre (2) supporte un dispositif de canalisation (60) du vent, à un ou plusieurs déflecteurs (6) servant à distribuer le courant éolien sur seulement une partie de la roue et un paravent (10) pour protéger la partie restante exposée au vent.

Fig. 1

- 1 -

## Moteur éolien

L'invention concerne un moteur éolien.

On sait que l'énergie naturelle du vent n'est encore actuellement que peu utilisée. On peut penser que ceci dépende du fait que les aéromoteurs connus de nos jours ont un rendement et une puissance faibles dans la mesure où leur construction est, de préférence, à écoulement radial.

La présente invention a pour but de proposer un moteur éolien ayant un rendement élevé ainsi qu'une bonne puissance. Nous avons atteint ce résultat en adoptant l'idée d'utiliser au moins une roue à écoulement radial, munie de pales fixées en rayons sur un rotor vertical, et de distribuer le courant éolien seulement sur une partie de la roue, alors que la partie restante est protégée du vent.

Les avantages obtenus grâce à cette invention consistent essentiellement en ce que le groupe moteur est actif sur toute sa hauteur; qu'il est sensible au vent soufflant dans n'importe quelle direction même à faible vitesse; qu'on peut le construire pour différentes puissances; qu'il est de réalisation aisée et de coût réduit. Dans ce qui suit, l'invention est exposée plus en détail à l'aide des dessins en annexe représentant seulement un mode d'exécution.

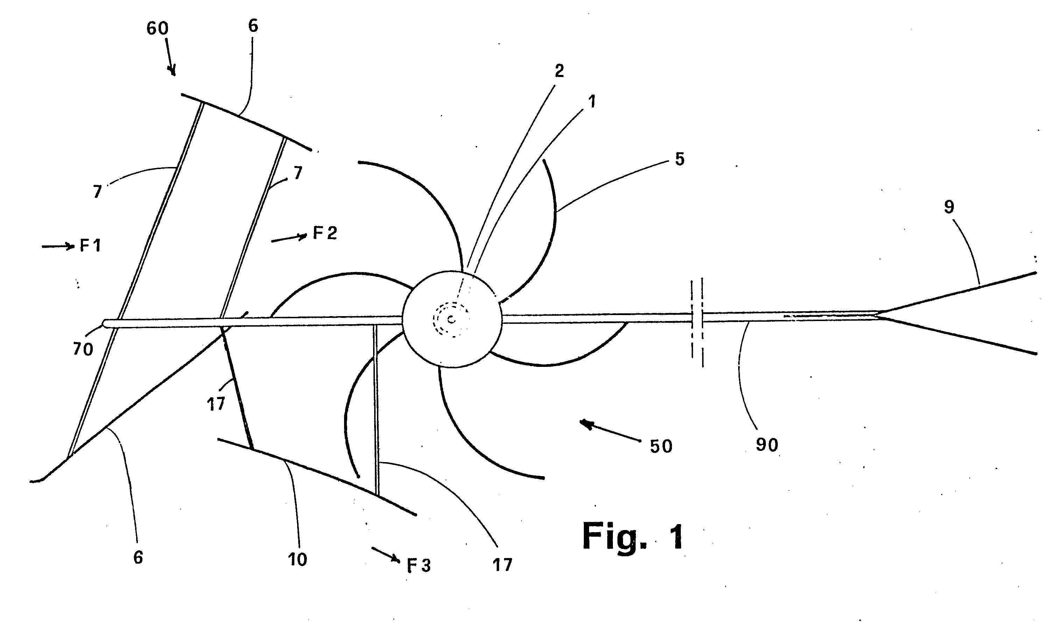

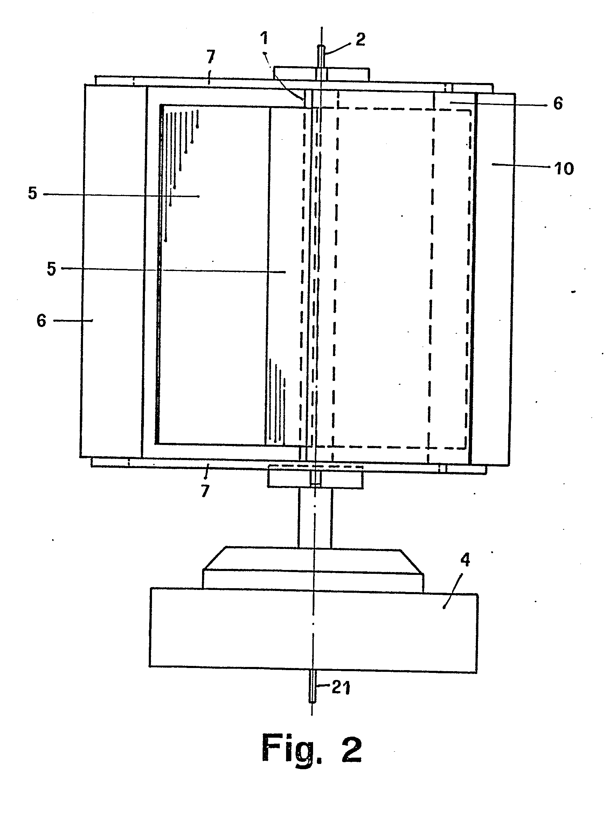

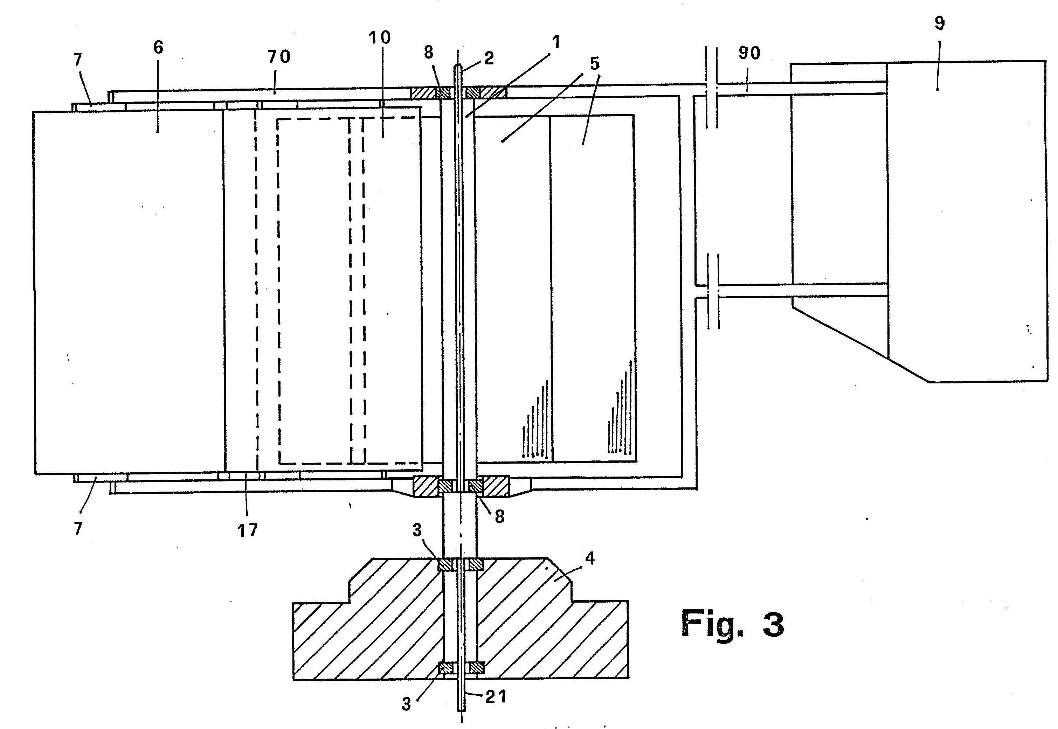

La figure 1 est la vue en plan d'un moteur éolien avec une roue, selon l'invention. La figure 2 est la vue frontale de celui-ci. La figure 3 est la vue latérale de celui-ci.

Les figures représentent un moteur éolien comprenant essentiellement: une roue (50) avec un rotor (1) à arbre (2) vertical, monté fou sur les paliers (3) d'une base (4), et avec plusieurs pales (5) radiales, égales, équidistantes et orientées dans le même sens, dont la surface est en forme de tuile cylindrique à axe vertical et dont un des côtés verticaux est en face et solidaire du rotor (1); un dispositif de canalisation (60) du vent ayant deux déflecteurs (6) situés en face et convergents vers une partie de la roue (50) servant à acheminer le vent, qui soufflant dans le sens indiqué par la flèche F1 arrive sur la roue (50), dans le sens indiqué par la flèche F2, de façon à créer la condition de répartition partielle: ces déflecteurs (6) sont supportés par des entretoises (7) horizontales, fixées sur un gouvernail - châssis (70) monté avec les paliers (8) fous sur

0083318

l'arbre (2) du rotor (1); de plus, ce gouvernail (70) dépasse de la roue, du côté diamétralement opposé aux déflecteurs (6), par l'intermédiaire, d'une bannière (90) sur l'extrémité de laquelle est fixée une queue formée par deux éléments (9) verticaux, divergents vers l'extérieur et servant à faire tourner, sous l'action du vent, les déflecteurs (6) autour de l'arbre (2) et à les placer contre le vent quelque soit la direction dans laquelle souffle celui-ci;

un paravent muni d'un déflecteur 10) vertical, supporté par des entretoises (17) fixées sur le châssis (70), à côté du déflecteur (6) le plus proche du gouvernail (70) et orienté de façon à protéger la partie restante de la roue exposée au vent qui est ainsi dévié dans le sens indiqué par la flèche F3;

deux embrayages centrifuges, par simplification non représentés sur les dessins, dont un permet à la roue de tourner librement jusqu'à ce que le vent atteigne la vitesse limite de 2-3 m/sec., et l'autre relie l'arbre moteur (2) à la prise de force (21) située au-dessous lorsque le vent dépasse cette vitesse limite.

Pour obtenir des puissances supérieures, l'arbre (2) est prolongé vers le haut pour pouvoir supporter une ou plusieurs roues superposées à la première (50) décrite et représentée sur les dessins en annexe.

- 4 -

0083318

<u>R E V E N D I C A T I O N S</u>

1) Moteur éolien caractérisé en ce qu'il comprend: une ou plusieurs roues (50) à écoulement radial montées superposées sur le même arbre moteur (2) vertical; un dispositif de canalisation (60) du vent servant à le diriger dans la zone de la partie de la roue exposée au vent; un paravent (10) servant à protéger la partie restante de la roue exposée au vent.

2) Moteur éolien selon la revendication 1), caractérisé en ce que chacune des roues (50) comprend plusieurs pales (5) radiales, verticales, plates ou en forme de tuile cylindrique.

3) Moteur éolien selon la revendication 1), caractérisé en ce que le dispositif de canalisation (60) comprend un ou plusieurs déflecteurs (6) convergents vers la roue, fixés autour de celle-ci au moyen d'un gouvernail (70) à queue (9),tournant fou autour de l'arbre (2).

4) Moteur éolien selon la revendication 1), caractérisé en ce que le paravent (10) comprend un ou plusieurs déflecteurs verticaux, situés à côté du dispositif de canalisation (60) et fixés sur le gouvernail (70).

5) Moteur éolien selon la revendication 1), caractérisé en ce que l'arbre moteur est relié à la prise de force (21) située en dessous, par l'intermédiaire de deux embrayages centrifuges dont un désactive la prise de force (21) jusqu'à ce que le vent atteigne la vitesse limite de 2-3 m/sec., et l'autre active celle-ci (21) lorsque le vent dépasse cette vitesse limite.

0083318

Fig. 1

Fig. 2

Fig. 3